(19) **Europäisches Patentamt / European Patent Office / Office européen des brevets**

(11) **EP 3 021 129 A1**

(12) **EUROPEAN PATENT APPLICATION**

(43) Date of publication:
**18.05.2016 Bulletin 2016/20**

(51) Int Cl.:
*G01S 5/06* (2006.01)  *G01S 5/12* (2006.01)
*G01S 5/14* (2006.01)  *H04W 64/00* (2009.01)
*G01S 5/02* (2006.01)

(21) Application number: **15194061.6**

(22) Date of filing: **11.11.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority:  **11.11.2014   US 201462077989 P**
**10.11.2015   US 201514937606**

(71) Applicant: **MediaTek, Inc**
**Hsin-Chu 300 (TW)**

(72) Inventors:
• **WANG, James June-Ming**
  **San Marino, CA 91108 (US)**
• **YU, Ching-Hwa**
  **Annan Dist., Tainan City 709 (TW)**
• **CHOU, Kai-Chun**
  **Taipei City 104 (TW)**
• **YEE, Chih-Shi**
  **Hsinchu City 300 (TW)**

(74) Representative: **Hoefer & Partner Patentanwälte mbB**
**Pilgersheimer Straße 20**
**81543 München (DE)**

(54) **JOINT POSITION DETECTION BY SENSOR DEVICES**

(57)    A method of joint position detection by a plurality of known location sensor devices is proposed in an indoor wireless local area network. A tag can query the sensors by sending a request. Timestamps of the query signal are recorded by the sensors. A known location designated sensor responds to the request and triggers a process to correct the clock offsets of other sensors. The timestamps are then corrected based on the clock offsets. The corrected timestamps are then sent to a position processor for determining the tag location.

FIG. 1

EP 3 021 129 A1

## Description

CROSS REFERENCE TO RELATED APPLICATIONS

This application claims priority under 35 U.S.C. §119 from U.S. Provisional Application Number 62/077,989, entitled "Joint Position Detection By Sensor Devices," filed on November 11, 2014, the subject matter of which is incorporated herein by reference.

TECHNICAL FIELD

The disclosed embodiments relate generally to wireless network communications, and, more particularly, to joint position detection by sensor devices in wireless local area networks.

BACKGROUND

IEEE 802.11 is a set of media access control (MAC) and physical layer (PHY) specification for implementing wireless local area network (WLAN) communication, in the unlicensed (2.4, 3.6, 5, and 60 GHz) frequency bands. The standards and amendments provide the basis for wireless network products using the IEEE 802.11 frequency bands. IEEE 802.11 plays an important role in the growing application of Indoor/Outdoor Location. The key applicable technology is that of ranging using time-of-flight (TOF) ranging measurements defined in IEEE 802.11v. Once the distance between devices is measured, the information can be used to determine device location.

Fixed location devices, e.g., wireless sensors may detect location of a tag within its service area via signal exchange with the tag. Examples of wireless sensors are embedded devices within the electrical or light switches, light bulb/fixtures, temperature sensors, alarm sensors, appliances, etc. Both signal time measurement and information carried in that signal can be used to calculate and exchange location information.

A solution for simplified way of location determination with a simple packet exchange between a tag and the sensors is sought.

SUMMARY

A method of joint position detection by a plurality of known location sensor devices is proposed in an indoor wireless local area network. A tag can query the sensors by sending a request. Timestamps of the query signal are recorded by the sensors. A known location designated sensor responds to the request and triggers a process to correct the clock offsets of other sensors. The timestamps are then corrected based on the clock offsets. The corrected timestamps are then sent to a position processor for determining the tag location.

In one embodiment, a sensor device receives a request packet from a wireless device in an indoor wireless local area network. The sensor device records a first timestamp on a reception time of the request packet. The sensor device receives a synchronization signal from a designated sensor device. The sensor device records a second timestamp on a reception time of the synchronization signal. The sensor device adjusts the first timestamp based on the second timestamp and a distance between the sensor device and the designated sensor device. The sensor device transmits the adjusted timestamp to a position-processing unit for determining location information of the wireless device.

In another embodiment, a designated sensor device receives a request packet from a wireless device in an indoor wireless local area network. The designated sensor device records a first timestamp on a reception time of the request packet. The designated sensor device transmits a synchronization signal to a plurality of sensor devices. The synchronization signal carries a departure time of the synchronization signal. The designated sensor device receives a plurality of timestamps from the sensor devices. The timestamps indicate corresponding arrival times of the request packet received by the sensor devices. Finally, the designated sensor device determines location information of the wireless device using the plurality of timestamps.

Other embodiments and advantages are described in the detailed description below. This summary does not purport to define the invention. The invention is defined by the claims.

BRIEF DESCRIPTION OF THE DRAWINGS

Figure 1 illustrates a wireless local area network with joint position detection using fixed location sensors in accordance with one novel aspect.

Figure 2 is a simplified bock diagram of a wireless tag device and a wireless sensor device that carry out certain embodiment of the invention.

Figure 3 illustrates a tag initiates a joint position detection by sending a request to a number of known location sensors, which trigger a designated sensor to send out a synchronization signal for the number of sensor to correct their clock offset.

Figure 4A illustrates a joint position detection based on corrected timestamps. The tag location can be calculated using various techniques such as triangular or other methods from the corrected timestamps.

Figure 4B illustrates one example of determining tag location in a wireless local area network.

Figure 5 illustrates a first embodiment of joint position detection that involves an external position-processing unit.

Figure 6 illustrates a second embodiment of joint position detection, where the tag device collects timestamps from a number of sensors for determining its own location information.

Figure 7 illustrates a third embodiment of joint position detection, where one of the sensor devices, e.g., the designated sensor determines the location information for the tag device.

Figure 8 is a flow chart of a method of joint position detection using a number of known location sensors in accordance with one novel aspect.

Figure 9 is a flow chart of a method of joint position detection from a designated sensor perspective in accordance with one novel aspect.

DETAILED DESCRIPTION

Reference will now be made in detail to some embodiments of the invention, examples of which are illustrated in the accompanying drawings.

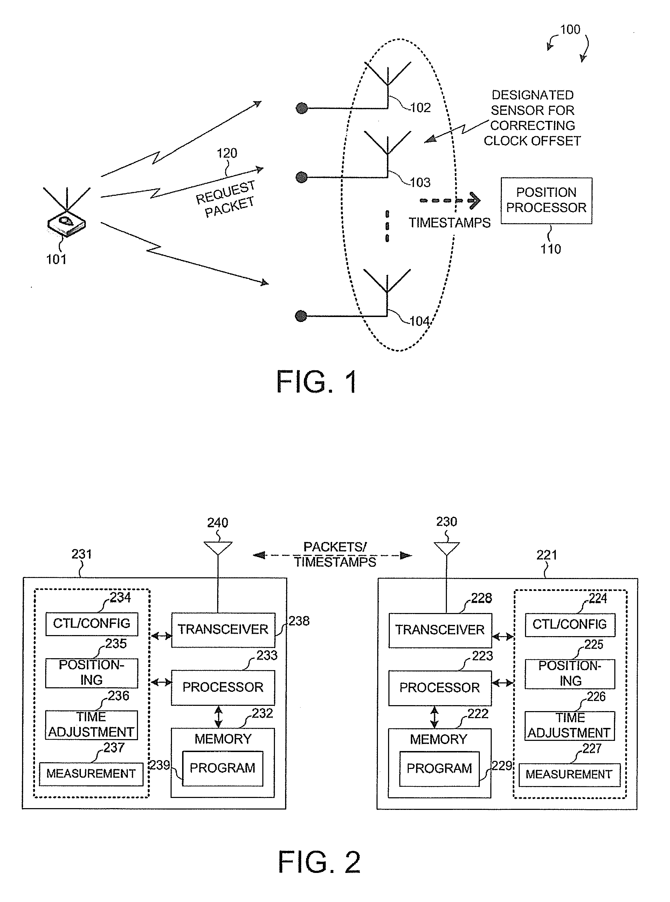

Figure 1 illustrates a wireless local area network 100 with joint location detection using fixed location sensors in accordance with one novel aspect. Wireless local area network 100 is an indoor network and comprises a wireless tag device 101, a number of sensors 102, 103, and 104, and a position-processing unit 110. For high accuracy applications, a number of known location sensors are deployed in various location of a venue. A tag can query the sensors for its location information by sending a request. A designated sensor responds to the query. Timestamps of signals are recorded by the number of deployed sensors and sent to a position processor for tag position determination. The tag position may then be transmitted back to the tag.

In the example of Figure 1, tag 101 initiates a joint position detection by sending a request packet 120 to the number of sensors. Each of the sensors then records a timestamp of a reception time of the request packet. The recorded timestamps are then sent to position-processing unit 110. Because the location of all the sensors are fixed and known by the position-processing unit 110, it is able to calculate the position of tag 101 based on the recorded timestamps. However, each of the sensors has its own independent clock, which is likely to drift away after certain time. As a result, the recorded timestamps are no longer accurate and thus cannot be used for position detection.

In accordance with one novel aspect, one of the known location sensors is a designated sensor that is responsible for synchronize the sensors with each other. For example, sensor 103 is the designated sensor. Upon receiving the request packet 120, designated sensor 103 triggers a simple process for all other sensors to correct their clock offset with respect to designated sensor 103. Upon correcting the clock offset, all the sensors are synchronized. The earlier recorded timestamps can then be adjusted based on the clock offset. The adjusted timestamps can then be used to jointly determine the tag location accurately.

Figure 2 is a simplified bock diagram of a wireless tag device 221 and a sensor device 231 that carry out certain embodiment of the invention. Wireless tag device 221 comprises memory 222, a processor 223, a control and configuration module 224, a positioning module 225, a time adjustment module 226, and a measurement module 227, and a transceiver 228 coupled to antenna 230. Similarly, sensor device 231 comprises memory 232, a processor 233, a control and configuration module 234, a positioning module 235, a time adjustment module 236, a measurement module 237, and a transceiver 238 coupled to antenna 240. In the transmitting direction, the transceiver converts received baseband signals from the processor to RF signals and sends out to the antenna. In the receiving direction, the processor processes the received baseband signals from the transceiver and invoke different functional modules to perform various features and embodiments supported by the wireless devices.

The different modules are functional circuits that can be implemented and configured in software, firmware, hardware, or any combination thereof. The function modules, when executed by processors 223 and 233 (via program instructions 229 and 239 contained in memory 222 and 232), interwork with each other to allow the wireless devices to perform enhanced channel access. For example, the measurement module performs packet transmission and reception timing measurements, the time adjustment module adjusts its clock and timing with respect to a reference clock or timing, the positioning module determines the absolute location of the wireless device based on the measurement result, and the control and configuration module configures related parameters and controls the positioning procedure. The related timing measurements are the departure time of a specific reference point at the transmit frame and the arrival of time of a specific reference point at the receive frame. The hardware delay within the signal path in the transceiver and cable should be calibrated and removed to yield the accurate timestamp measurements at the antenna.

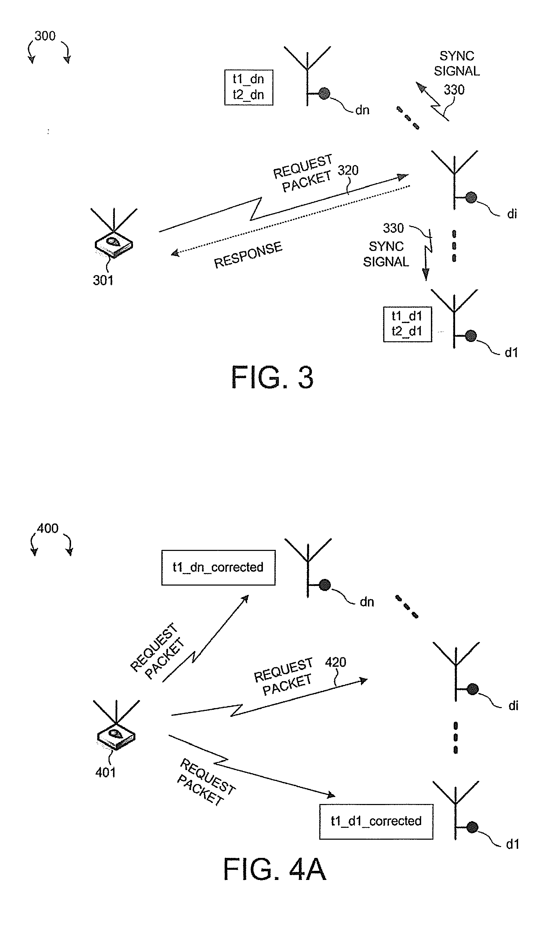

Figure 3 illustrates a tag that initiates a joint position detection by sending a request to a number of known location sensors, which triggers a designated sensor to send out a synchronization signal for the number of sensor to correct their clock offsets with respect to the designated sensor. In the example of Figure 3, WLAN 300 includes a wireless tag device 301 and a plurality of fixed location sensor devices (d1, d2 ... dn). Among the plurality of sensor devices, one of the sensor device di is a designated sensor. The designated sensor can be selected based on different criteria. For example, in a conference room, a sensor device that is located in the center of the conference room can be selected as the designated sensor. The designated sensor can also be selected randomly or rotated periodically. If the designated sensor is broken or is out of range of the tag transmission, then a backup designated sensor can be used.

To initiate a joint position detection process, tag device 301 first sends a request packet 320 to the number of sensor devices d1 to dn. The designated sensor device di can send a response packet back to tag device 301. All the known location sensor device (dx) record the receive timestamps (t1_dx, x = 1, 2 ... n) of the request packet. Note that these timestamps are unusable for detecting the tag location because the sensor devices are not synchronized with each other. In accordance with one novel aspect, the designated sensor device di transmits a synchronization signal 330 all other sensor devices d1 to dn other than itself. The synchronization signal is used by the other sensor devices to correct their clock offsets. For example, a known location sensor dx knows its distance from the designated sensor device di that sent the synchronization signal. This translates into a propagation delay as: (distance$_{dx-di}$)/c, where c is the speed of light. If the synchronization signal is sent at a fixed known departure time (constant), then this departure time can be used as a common factor for sensor dx to correct its clock offset $\Delta dx$ as follows: t2_dx - (distance$_{dx-di}$)/c + $\Delta dx$ = constant for x = 1, 2 ... n, x≠i. Once each sensor device dx corrects its clock offset, then it can adjust the timestamp of the request packet t1_dx accordingly. For example, the adjusted timestamp of the request packet at sensor dx:

$$\texttt{t1\_dx\_corrected = t1\_dx + } \Delta \texttt{dx.}$$

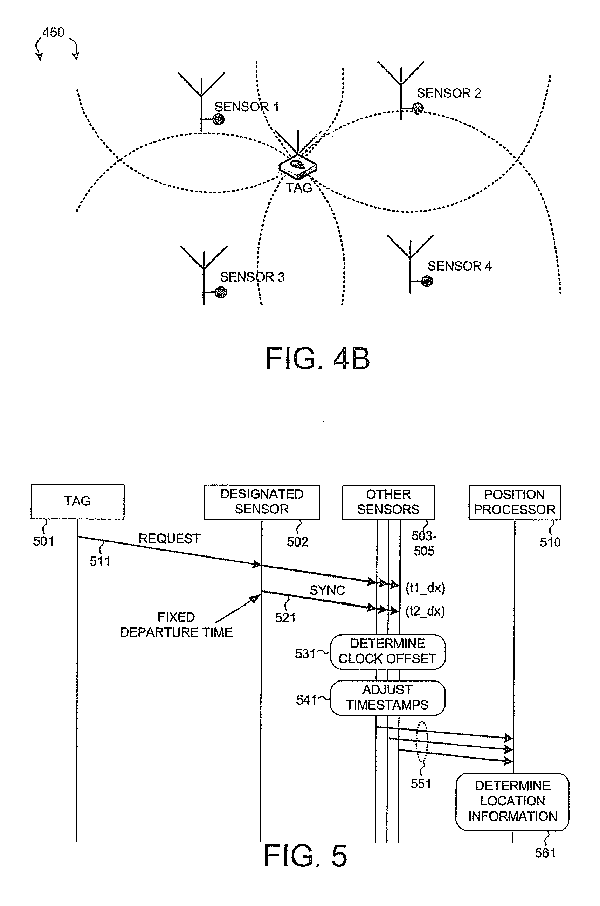

Figure 4A illustrates a joint position detection based on corrected timestamps. In the example of Figure 4, WLAN 400 includes a wireless tag device 401 and a plurality of fixed location sensor devices (d1, d2 ... dn). Among the plurality of sensor devices, one of the sensor device di is a designated sensor. To initiate a joint position detection process, tag device 401 first sends a request packet 420 to the number of sensor devices d1 to dn. All the known location sensor device (dx) record the receive timestamps (t1_dx, x = 1, 2 ... n) of the request packet. These timestamps are then corrected based on the method illustrated in Figure 3 to become the corrected timestamps (t1_dx_corrected, x = 1, 2 ... n, x≠i). The tag location can be calculated using various techniques such as triangular or other methods from the corrected timestamps.

Figure 4B illustrates one example of determining tag location in a wireless local area network WLAN 450. WLAN comprises four fixed location sensor devices 1-4 (d1 to d4) and a tag. The distance between the tag and each sensor can be determined from the time of flight (TOF) measurement information. For example, if the tag transmits a request packet at time t0, and each sensor receives the packet at time t1_dx_corrected, then:

TOF(d1-tag) = t1_d1_corrected - t0,
TOF(d2-tag) = t1_d2_corrected - t0,
TOF(d3-tag) = t1_d3_corrected - t0,
TOF(d4-tag) = t1_d4_corrected - t0,

and

distance from tag to d1 = C * TOF(d1-tag),
distance from tag to d2 = C * TOF(d2-tag),
distance from tag to d3 = C * TOF(d3-tag),
distance from tag to d4 = C * TOF(d4-tag),

where

C is the speed of radio signal.

For 3D positioning, the tag needs to exchange packets with four sensors in order to determine its absolute location.

Figure 5 illustrates a first embodiment of joint position detection that involves an external position-processing unit in a wireless local area network. The WLAN comprises a wireless tag device 501, a designated sensor device 502 (di), a plurality of other known location sensor devices 503-505 (dx, x = 1, 2 ... n, x≠i), and a position processor 510. In step 511, the tag device sends a request packet to all the known location sensor devices. Each of the sensor devices records a reception timestamp of the request packet (t1_dx). In step 521, the designated sensor device 502 sends out a synchronization signal to all other sensor devices 503-505. The synchronization signal is transmitted at a fixed departure time, which is known to the other sensors. The other sensor devices also record a reception timestamp of the synchronization signal (t2_dx). Based on the fixed departure time, the reception time, and the known propagation delay between sensor di and sensor dx, in step 531, each sensor device is then able to correct its clock offset with respect to the designated sensor device di based on the method illustrated in Figure 3. In step 541, upon determining the clock offset, each sensor device dx adjusts its timestamp t1_dx of the request packet to t1_dx_corrected. In step 551, each sensor device dx transmits the corrected timestamp to position processor 510. Because the location information of all the sensor devices is known, in step 561, the position processor 510 is then able to compute the tag location based on the corrected timestamps.

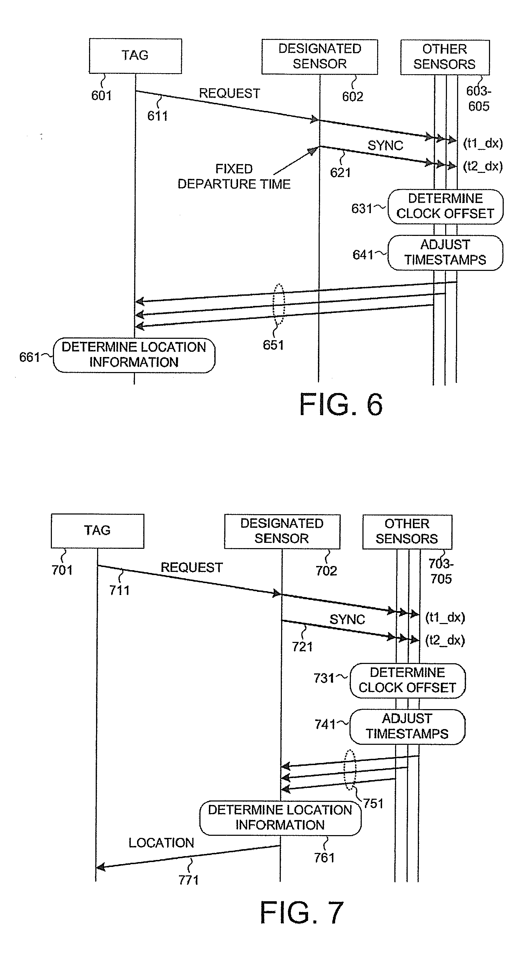

Figure 6 illustrates a second embodiment of joint position detection, where the tag device collects timestamps from a number of sensors for determining its own location information in a wireless local area network. The WLAN comprises a wireless tag device 601, a designated sensor device 602 (di), and a plurality of other known location sensor devices 603-605 (dx, x = 1, 2 ... n, x≠i). Figure 6 is similar to Figure 5. In the embodiment of Figure 6, however, there is no external position processor. The position processor is located within the wireless tag device 601 itself.

The In step 611, the tag device sends a request packet to all the known location sensor devices. Each of the sensor devices records a reception timestamp of the request packet (t1_dx). In step 621, the designated sensor device 602 sends out a synchronization signal to all other sensor devices 603-605. The synchronization signal is transmitted at a fixed departure time, which is known to the other sensors. The other sensor devices also record a reception timestamp of the synchronization signal (t2_dx). Based on the fixed departure time, the reception time, and the known propagation delay between sensor di and sensor dx, in step 631, each sensor device is then able to correct its clock offset with respect to the designated sensor device di based on the method illustrated in Figure 3. In step 641, upon determining the clock offset, each sensor device dx adjusts its timestamp t1_dx of the request packet to t1_dx_corrected. In step 651, each sensor device dx transmits the corrected timestamp to tag device 601. The location information of all the sensor devices should also be transmitted to the tag device. In step 661, the tag device is then able to compute its location based on the corrected timestamps.

Figure 7 illustrates a third embodiment of joint position detection, where one of the sensor devices, e.g., the designated sensor determines the location information for the tag device in a wireless local area network. The WLAN comprises a wireless tag device 701, a designated sensor device 702 (di), and a plurality of other known location sensor devices 703-705 (dx, x = 1, 2 ... n, x≠i). Figure 7 is similar to Figure 5. In the embodiment of Figure 7, however, there is no external position processor. The position processor is located within one of the sensor devices, e.g., designated sensor 702.

The In step 711, the tag device sends a request packet to all the known location sensor devices. Each of the sensor devices records a reception timestamp of the request packet (t1_dx). In step 721, the designated sensor device 702 sends out a synchronization signal to all other sensor devices 703-705. The synchronization signal is transmitted at a fixed departure time, which is known to the other sensors. The other sensor devices also record a reception timestamp of the synchronization signal (t2_dx). Based on the fixed departure time, the reception time, and the known propagation delay between sensor di and sensor dx, in step 731, each sensor device is then able to correct its clock offset with respect to the designated sensor device di based on the method illustrated in Figure 3. In step 741, upon determining the clock offset, each sensor device dx adjusts its timestamp t1_dx of the request packet to t1_dx_corrected. In step 751, each sensor device dx transmits the corrected timestamp to the designated sensor device 702. Typically, the designated sensor already knows the location information of all the other sensor devices. In step 761, the designated sensor device 702 computes the tag location based on the corrected timestamps. Note that if internal hardware TX and RX delay of the designated sensor device is known, then its own timestamp t1_di-Δ_calibration can also be used in the tag location computation. Finally, in step 771, the designated sensor device 702 transmits the tag location information to the tag device 701.

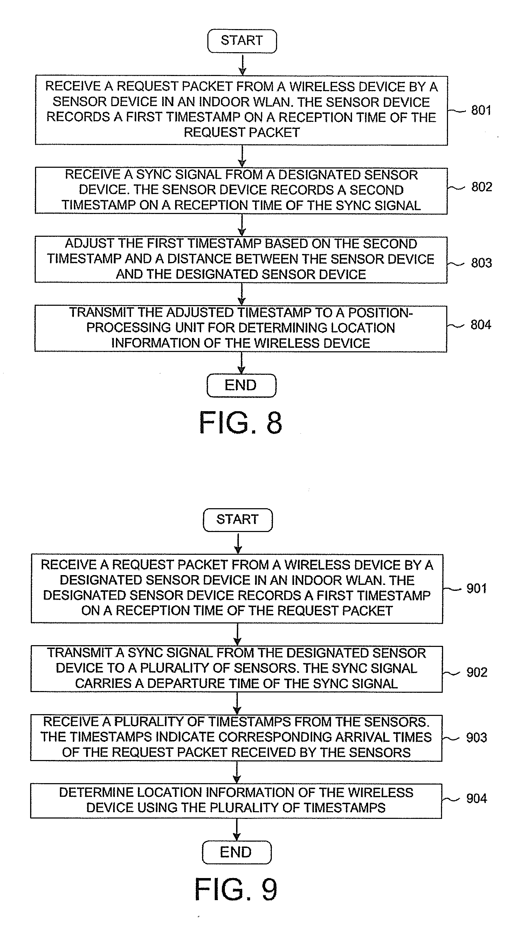

Figure 8 is a flow chart of a method of joint position detection using a number of known location sensors in accordance with one novel aspect. In step 801, a sensor device receives a request packet from a wireless device in an indoor wireless local area network. The sensor device records a first timestamp on a reception time of the request packet. In step 802, the sensor device receives a synchronization signal from a designated sensor device. The sensor device records a second timestamp on a reception time of the synchronization signal. In step 803, the sensor device adjusts the first timestamp based on the second timestamp and a distance between the sensor device and the designated sensor device. In step 804, the sensor device transmits the adjusted timestamp to a position-processing unit for determining location information of the wireless device.

Figure 9 is a flow chart of a method of joint position detection from a designated sensor perspective in accordance with one novel aspect. In step 901, a designated sensor device receives a request packet from a wireless device in an indoor wireless local area network. The designated sensor device records a first timestamp on a reception time of the request packet. In step 902, the designated sensor device transmits a synchronization signal to a plurality of sensor devices. The synchronization signal carries a departure time of the synchronization signal. In step 903, the designated sensor device receives a plurality of timestamps from the sensor devices. The timestamps indicate corresponding arrival times of the request packet received by the sensor devices. In step 904, the designated sensor device determines location information of the wireless device using the plurality of timestamps.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

**Claims**

1. A method comprising:

    receiving a request packet from a wireless device by a sensor device in an indoor wireless local area network (WLAN), wherein the sensor device records a first timestamp on a reception time of the request packet;
    receiving a synchronization signal from a designated sensor device, wherein the sensor device records a second timestamp on a reception time of the synchronization signal;
    adjusting the first timestamp based on the second timestamp and a distance between the sensor device and the designated sensor device;

and
providing the adjusted first timestamp to a position-processing unit for determining location information of the wireless device.

2.   The method of Claim 1, wherein the synchronization signal comprises a departure time for determining a clock offset of the sensor device.

3.   The method of Claim 2, wherein the first timestamp is adjusted based on the clock offset determined based on a propagation time between the sensor device and the designated sensor.

4.   The method of Claim 1, wherein the positioning-processing unit is located within the designated sensor device or within the wireless device.

5.   The method of Claim 1, wherein the positioning-processing unit is located within the sensor device, and wherein the sensor device receives a plurality of adjusted timestamps on reception times of the request packet by a plurality of sensor devices.

6.   The method of Claim 1, wherein the location information is determined using a triangulation location algorithm.

7.   A sensor device, comprising:

a receiver that receives a request packet from a wireless device in an indoor wireless local area network (WLAN), wherein the sensor device records a first timestamp on a reception time of the request packet;
the receiver that receives a synchronization signal from a designated sensor device, wherein the sensor device records a second timestamp on a reception time of the synchronization signal;
a time-adjustment unit that adjusts the first timestamp based on the second timestamp and a distance between the sensor device and the designated sensor device; and
a transmitter that transmits the adjusted first timestamp to a position-processing unit for determining location information of the wireless device.

8.   The sensor device of Claim 7, wherein the synchronization signal comprises a departure time for determining a clock offset of the sensor device.

9.   The sensor device of Claim 8, wherein the first timestamp is adjusted based on the clock offset determined based on a propagation time between the sensor device and the designated sensor.

10.  The sensor device of Claim 7, wherein the positioning-processing unit is located within the designated sensor device or the wireless device.

11.  The sensor device Claim 7, wherein the positioning-processing unit is located within the sensor device, and wherein the sensor device receives a plurality of adjusted timestamps on reception times of the request packet by a plurality of sensor devices.

12.  The sensor device of Claim 11, wherein the location information is determined using a triangulation location algorithm.

13.  A method, comprising:

receiving a request packet from a wireless device by a designated sensor device in an indoor wireless local area network (WLAN), wherein the designated sensor device records a first timestamp on a reception time of the request packet;
transmitting a synchronization signal from the designated sensor device to a plurality of sensors, wherein the synchronization signal carries a departure time of the synchronization signal;
receiving a plurality of timestamps from the plurality of sensors, wherein the plurality of timestamps indicates a corresponding arrival time of the request packet received by the plurality of sensors; and
determining location information of the wireless device using the plurality of timestamps.

14.  The method of Claim 13, wherein the plurality of timestamps are adjusted based on the synchronization signal and distance information between the plurality of sensors and the designated sensor device.

15.  The method of Claim 13, wherein the first timestamp is also used in determining the location information.

16.  The method of Claim 15, wherein the first timestamp is adjusted based on an internal hardware delay of a transceiver of the designated sensor device.

17.  The method of Claim 13, further comprising:

transmitting the location information to the wireless device.

18.  The method of Claim 13, wherein the location information is determined using a triangulation location algorithm.

FIG. 1

FIG. 2

FIG. 3

FIG. 4A

FIG. 4B

FIG. 5

FIG. 6

FIG. 7

START

RECEIVE A REQUEST PACKET FROM A WIRELESS DEVICE BY A SENSOR DEVICE IN AN INDOOR WLAN. THE SENSOR DEVICE RECORDS A FIRST TIMESTAMP ON A RECEPTION TIME OF THE REQUEST PACKET ⟶ 801

RECEIVE A SYNC SIGNAL FROM A DESIGNATED SENSOR DEVICE. THE SENSOR DEVICE RECORDS A SECOND TIMESTAMP ON A RECEPTION TIME OF THE SYNC SIGNAL ⟶ 802

ADJUST THE FIRST TIMESTAMP BASED ON THE SECOND TIMESTAMP AND A DISTANCE BETWEEN THE SENSOR DEVICE AND THE DESIGNATED SENSOR DEVICE ⟶ 803

TRANSMIT THE ADJUSTED TIMESTAMP TO A POSITION-PROCESSING UNIT FOR DETERMINING LOCATION INFORMATION OF THE WIRELESS DEVICE ⟶ 804

END

FIG. 8

START

RECEIVE A REQUEST PACKET FROM A WIRELESS DEVICE BY A DESIGNATED SENSOR DEVICE IN AN INDOOR WLAN. THE DESIGNATED SENSOR DEVICE RECORDS A FIRST TIMESTAMP ON A RECEPTION TIME OF THE REQUEST PACKET ⟶ 901

TRANSMIT A SYNC SIGNAL FROM THE DESIGNATED SENSOR DEVICE TO A PLURALITY OF SENSORS. THE SYNC SIGNAL CARRIES A DEPARTURE TIME OF THE SYNC SIGNAL ⟶ 902

RECEIVE A PLURALITY OF TIMESTAMPS FROM THE SENSORS. THE TIMESTAMPS INDICATE CORRESPONDING ARRIVAL TIMES OF THE REQUEST PACKET RECEIVED BY THE SENSORS ⟶ 903

DETERMINE LOCATION INFORMATION OF THE WIRELESS DEVICE USING THE PLURALITY OF TIMESTAMPS ⟶ 904

END

FIG. 9

Europäisches
Patentamt

European
Patent Office

Office européen
des brevets

# EUROPEAN SEARCH REPORT

Application Number

EP 15 19 4061

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 6 975 618 B1 (SMITH MARK [US] ET AL) 13 December 2005 (2005-12-13) * column 3, line 42 - column 7, line 38; figures 1,2 * | 1-18 | INV. G01S5/06 G01S5/12 G01S5/14 H04W64/00 G01S5/02 |
| Y | US 2005/090268 A1 (YAMASAKI RYOTA [JP] ET AL) 28 April 2005 (2005-04-28) * paragraph [0025] - paragraph [0039]; figures 1, 2 * | 1-18 | |
| Y | US 2013/072217 A1 (ZHANG XIAOXIN [US] ET AL) 21 March 2013 (2013-03-21) * paragraph [0025] * | 16 | |
| A | YAMASAKI R ET AL: "TDOA location system for IEEE 802.11b WLAN", WIRELESS COMMUNICATIONS AND NETWORKING CONFERENCE, 2005 IEEE NEW ORLEANS, LA, USA 13-17 MARCH 2005, PISCATAWAY, NJ, USA,IEEE, vol. 4, 13 March 2005 (2005-03-13), pages 2338-2343, XP010791542, DOI: 10.1109/WCNC.2005.1424880 ISBN: 978-0-7803-8966-3 * the whole document * | 1-18 | |
| A | US 2014/253388 A1 (JALALI AHMAD [US] ET AL) 11 September 2014 (2014-09-11) * abstract * | 1-18 | TECHNICAL FIELDS SEARCHED (IPC) G01S H04W |
| A | US 2002/059535 A1 (BEKRITSKY BENJAMIN J [US] ET AL) 16 May 2002 (2002-05-16) * paragraph [0015] - paragraph [0017]; figure 2 * | 1-18 | |

-/--

The present search report has been drawn up for all claims

| Place of search | Date of completion of the search | Examiner |
|---|---|---|
| Munich | 8 March 2016 | La Casta Muñoa, S |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

# EUROPEAN SEARCH REPORT

**Application Number**

EP 15 19 4061

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MCELROY CIARAN ET AL: "Comparison of wireless clock synchronization algorithms for indoor location systems", 2014 IEEE INTERNATIONAL CONFERENCE ON COMMUNICATIONS WORKSHOPS (ICC), IEEE, 10 June 2014 (2014-06-10), pages 157-162, XP032630744, DOI: 10.1109/ICCW.2014.6881189 [retrieved on 2014-08-20] * page 159 * | 1-18 | |

TECHNICAL FIELDS
SEARCHED      (IPC)

The present search report has been drawn up for all claims

| Place of search | Date of completion of the search | Examiner |
|---|---|---|
| Munich | 8 March 2016 | La Casta Muñoa, S |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 19 4061

This annex lists the patent family members relating to the patent documents cited in the above-mentioned European search report.
The members are as contained in the European Patent Office EDP file on
The European Patent Office is in no way liable for these particulars which are merely given for the purpose of information.

08-03-2016

| Patent document cited in search report | | Publication date | Patent family member(s) | | Publication date |
|---|---|---|---|---|---|
| US 6975618 | B1 | 13-12-2005 | NONE | | |
| US 2005090268 | A1 | 28-04-2005 | JP | 2005130154 A | 19-05-2005 |
| | | | US | 2005090268 A1 | 28-04-2005 |
| US 2013072217 | A1 | 21-03-2013 | CN | 103947269 A | 23-07-2014 |
| | | | EP | 2759176 A1 | 30-07-2014 |
| | | | JP | 2014534412 A | 18-12-2014 |
| | | | KR | 20140069203 A | 09-06-2014 |
| | | | US | 2013072217 A1 | 21-03-2013 |
| | | | US | 2014235270 A1 | 21-08-2014 |
| | | | WO | 2013043681 A1 | 28-03-2013 |
| US 2014253388 | A1 | 11-09-2014 | NONE | | |
| US 2002059535 | A1 | 16-05-2002 | AT | 457619 T | 15-02-2010 |
| | | | AT | 478481 T | 15-09-2010 |
| | | | AT | 506828 T | 15-05-2011 |
| | | | AU | 784463 B2 | 06-04-2006 |
| | | | AU | 785280 B2 | 21-12-2006 |
| | | | AU | 1978502 A | 27-05-2002 |
| | | | AU | 2688402 A | 27-05-2002 |
| | | | AU | 2692802 A | 27-05-2002 |
| | | | AU | 2002226884 B2 | 01-06-2006 |
| | | | BR | 0107383 A | 05-11-2002 |
| | | | BR | 0107786 A | 22-10-2002 |
| | | | BR | 0115959 A | 03-05-2005 |
| | | | CA | 2398779 A1 | 23-05-2002 |
| | | | CA | 2398781 A1 | 23-05-2002 |
| | | | CA | 2419796 A1 | 23-05-2002 |
| | | | CN | 1500323 A | 26-05-2004 |
| | | | CN | 1568599 A | 19-01-2005 |
| | | | CN | 1636413 A | 06-07-2005 |
| | | | EP | 1334578 A2 | 13-08-2003 |
| | | | EP | 1336277 A2 | 20-08-2003 |
| | | | EP | 1336310 A2 | 20-08-2003 |
| | | | JP | 3961951 B2 | 22-08-2007 |
| | | | JP | 4226325 B2 | 18-02-2009 |
| | | | JP | 4594585 B2 | 08-12-2010 |
| | | | JP | 4717035 B2 | 06-07-2011 |
| | | | JP | 2004514356 A | 13-05-2004 |
| | | | JP | 2004514376 A | 13-05-2004 |
| | | | JP | 2004529520 A | 24-09-2004 |
| | | | JP | 2007295621 A | 08-11-2007 |
| | | | KR | 20030066636 A | 09-08-2003 |
| | | | TW | 582143 B | 01-04-2004 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 15 19 4061

This annex lists the patent family members relating to the patent documents cited in the above-mentioned European search report.
The members are as contained in the European Patent Office EDP file on
The European Patent Office is in no way liable for these particulars which are merely given for the purpose of information.

08-03-2016

| Patent document cited in search report | Publication date | Patent family member(s) | | Publication date |
|---|---|---|---|---|
| | | TW | I235615 B | 01-07-2005 |
| | | US | 2002059535 A1 | 16-05-2002 |
| | | US | 2002097182 A1 | 25-07-2002 |
| | | US | 2002098852 A1 | 25-07-2002 |
| | | US | 2006125690 A1 | 15-06-2006 |
| | | US | 2006160545 A1 | 20-07-2006 |
| | | WO | 0241504 A2 | 23-05-2002 |
| | | WO | 0241545 A2 | 23-05-2002 |
| | | WO | 0241651 A2 | 23-05-2002 |

EPO FORM P0459

For more details about this annex : see Official Journal of the European Patent Office, No. 12/82

**REFERENCES CITED IN THE DESCRIPTION**

**Patent documents cited in the description**

- US 62077989 A